# EUROPEAN PATENT SPECIFICATION

(11) **EP 0 663 423 B1**
(45) Date of publication and mention of the grant of the patent: **11.04.2001**
(21) Application number: 95870002.3
(22) Date of filing: 12.01.1995
(51) Int. Cl.: C08L 51/04

(54) **Monovinyl aromatic compounds having improved abrasion resistance**
Monovinylaromatische Zusammensetzungen mit verbesserter Abriebbeständigkeit
Mélanges maitres d'aromatiques monovinyliques ayant une résistance à l'abrasion améliorée

(30) Priority: 12.01.1994 US 180270
(43) Date of publication of application: 19.07.1995
(73) Proprietor: FINA TECHNOLOGY, INC., Houston, Texas 77267-4412 (US)
(72) Inventor: Sehyun, Kim, Houston, Texas 77062 (US); Blackmon, Kenneth, Houston, Texas 77062 (US); Sosa, Jose'M., Deer Park, Texas 77536 (US)
(74) Representative: Detrait, Jean-Claude

(56) References cited:
- EP-A- 0 245 856
- BE-A- 816 985
- DATABASE "CHEMICAL ABSTRACTS" (HOST: STN): abstract 111: 155 224, Colombus,Oh, USA; & JP-A-01 108 245 (KAO CORP.) 25. April 89

## Description

### BACKGROUND OF THE INVENTION

The present invention relates to the manufacture of monovinyl aromatic compounds having low friction, abrasion-resistant qualities for use in products such as video cassette housings and audio cassette cases, drinking cups, and food packaging containers. The monovinyl aromatic compounds include impact polystyrene having a high molecular weight polyethylene wax blended therewith.

Video cassette shells are currently manufactured out of several materials. One such material utilizes a silicone oil added to a high-impact polystyrene. This material is characterized by low friction and high-impact but has problems with acceptance in the industry due to potential problems encountered in processing. An example of such a material is one which contains poly (dimethylsiloxane) levels of up to about 2000 ppm.

Another such material claiming low friction and high abrasion resistance is one having small particles or "pools" of an unknown component dispersed within a polystyrene matrix. It appears from a melting point analysis that this component is a low molecular weight wax having an Mₙ molecular weight below about 800. The low molecular weight component is present in this material in amounts of about 1 percent by weight.

One of the major criteria for materials used in manufacturing cassette shells and computer discs is that the material exhibit a low coefficient of friction (COF).

One of the major problems with the materials currently being used for video cassette shells and other applications such as computer floppy disks, audio cassette shells, drinking cups and food packaging containers is that they are not sufficiently abrasion resistant to prevent "dusting" of surface material while in use. This "dusting" creates extremely small particles called "fines" which, in the case of cassettes, enter the electronic apparatus and dirty the recording and playback heads as well as causing other problems with the electronics. One method of solving this problem in the past has been to utilize an expensive material such as acrylonitrile butadiene styrene (ABS) copolymers. Attempts to use much less expensive materials such as polystyrene have failed for the reasons that low coefficient of friction and high abrasion resistance are very difficult to achieve with polystyrene as opposed to ABS.

In the case of drinking cups and food packaging containers, polymer fines such as "dust" and "hair" from the manufacturing processes, although chemically inert and non-toxic, do cause "aesthetic contamination" of the container contents, leading to consumer dissatisfaction with these products.

It appears that the key to solving cassette abrasion problems and container contamination is in preventing the material from abrading after it leaves the injection mold and while it is being conveyed to the assembly line. Monovinylaromatic compounds that have been rubber-modified, such as Impact Polystyrene (IPS), are usually made into parts like food containers, cassette shells and floppy discs by injection molding, wherein molten polymer is forced under pressure into water-cooled molds to form the part. The molten material, at temperatures of around 220 to 240°C , is forced into the mold and then cooled to about 100°C to solidify the molded part. The molded parts are then ejected from the mold and placed on a conveyor belt. It is while the part cools from the 100°C temperature to ambient temperature that it is particularly susceptible to abrasion and creation of fines. This is because with conventional materials, the waxes and oils utilized to obtain low COF's are still molten in the molded article at 100°C and thus are not at all resistant to abrasion and may cause the article to have a tacky or sticky surface when subjected to frictional forces.

A need therefore existed for a low friction, abrasion resistant polymeric material for use in manufacturing drinking cups, food containers, and cases and shells for video and audio cassettes, compact disks, and computer disks. Such material should, in addition to having a low coefficient of friction and high abrasion resistance, also have good elasticity and toughness to prevent breaking upon flexing. Just as importantly and perhaps critically, the material must successfully resist abrasion at elevated mold-ejection temperatures of around 100°C. In addition, the material must also exhibit good "slipperiness" and resistance to "dusting" at lower temperatures, including room temperatures and even at refrigerator and freezer temperatures.

Conventional methods of manufacturing food containers, cassette shells and computer floppy discs include that method described in Belgian Patent No. 816,985 which teaches the use of waxes with molecular weights (MW) between 2000 and 12,000 and melting points (MP) of 82-98°C. U.S. Patent No. 4,961,800 discloses the use of waxes as anti-hazing additives in plastic windows. U.S. 2,681,323 teaches the manufacture of phonograph records with lowered COF's using waxes such as beeswax, carnauba, and BE Square (Petrolite) which all have MP's below about 90°C and MW's of less than 1000. U.S. 3,873,645 teaches the use of long-chain fatty acid amides and ethylene oxide derivatives as antistatic agents. Thus the conventional processes which use waxes as COF improvers do not teach the use of waxes that can withstand abrasion at temperatures in the 100°C range. These conventional processes do not even address problems of abrasion at temperatures above ambient.

It has also been found that conventional processes that attempted to improve polymer COF by the addition of waxy additives utilized additives that were too soluble in rubber and/or polystyrene and therefore did not exist as discrete particles in the solid matrix. Thus their lubricity effects were minimized and even eliminated by their being dissolved in one or the other components of the polymer. The present invention provides a low cost monovinyl-aromatic-based material which exhibits a desirable coefficient of friction, a high abrasion resistance at elevated temperatures, and good strength and toughness.

### SUMMARY OF THE INVENTION

The present invention discloses a low friction, abrasion resistant monovinyl aromatic material having high impact strength, which material is particularly suitable for manufacturing drinking cups, food containers, cassette shells and floppy disks for computers. The monovinyl aromatic material is a high-impact polymer having rubber particles to impart impact strength and additionally having a significant amount of a high molecular weight polyethylene wax (in the range of Mₙ = 1000 to 7000) to provide a very low coefficient of friction and further to prevent abrasion of the material into fines. The particular wax selected also has a Melting Point temperature (MP) above about 90°C and preferably exceeding about 100°C.

The present invention discloses an impact resistant polystyrene compound comprising a blend of:
a) from 95 to 99 % by weight of an impact resistant polystyrene polymer having discrete particles of rubber in a polystyrene matrix; and
b) from 1 to 5 % by weight of a high molecular weight polyethylene wax having a number average molecular weight ranging from 1000 to 7000 and a melting point greater than 100° C, and having a penetration value at 25° C as measured by ASTM D-1321 of less than 1.

It is further disclosed a method of manufacturing an impact resistant polystyrene compound exhibiting improved coefficient of friction and anti-dusting properties, said method comprising melt-blending with an impact polystyrene compound up to 5 % by weight of a high molecular weight polyethylene wax having a number average molecular weight exceeding 1000, a melting point exceeding 100° C, and a penetration value of less than 1.

Further embodiments of the invention are disclosed in the dependent claims.

### DESCRIPTION OF THE PREFERRED EMBODIMENTS

One low-friction, abrasion-resistant monovinyl aromatic material disclosed in this invention and being particularly advantageous for manufacture according to the present invention is what is commonly termed an impact polystyrene or IPS. The conventional IPS material, while exhibiting sufficient toughness and strength to serve as a building material for items such as drinking cups, cassette shells and floppy disks, unfortunately exhibits an abrasion resistance which is too low to be successfully utilized in such products. Therefore, by adding a lubricity component to such materials, which component comprises a high molecular weight polyethylene wax, the present invention achieves an impact polystyrene material having high abrasion resistance at temperatures in the range of 100°C, and good lubricity, which material successfully replaces the much more expensive materials such as ABS.

The monovinyl aromatic materials of the present invention are preferably polystyrene-type materials including alphamethylstyrene, paramethylstyrene, and other ring-substituted styrenes. In one preferred embodiment, a polystyrene (IPS) material was manufactured according to the present invention and resulted in an extremely durable, low friction, highly abrasion resistant polymer extremely well suited for the particular uses intended. It has been found that whereas the aforementioned conventional materials utilize a microcrystalline wax (i.e., molecular weight below 800) to obtain a low coefficient of friction, these materials suffered in that the low molecular weight microcrystalline waxes tended to migrate into the rubber particles in the IPS and therefore lost their efficacy. On the other hand, it has been found by the present inventors that utilizing a polyethylene wax having a melting point temperature (MP) above about 100°C and a molecular weight of about 1000 to about 7000 results in a polyethylene particle in the IPS matrix material that is solid at the mold-ejection temperature and which does not significantly migrate into the rubber particle and therefore exists as particles in the polystyrene matrix of the IPS material. As a result, the existing polyethylene particles scattered throughout the polystyrene matrix serve to provide lubricity and abrasion resistance in the IPS material especially during the critical stage between mold-ejection and cooling to ambient temperature.

In the following table, different samples of IPS containing different types of waxes were evaluated with respect to the usual impact and gloss properties plus COF and dusting characteristics. The samples were prepared by melt-blending, on a twin screw extruder, IPS materials and polyethylene waxes. Dusting was measured by rubbing together hot molded articles to simulate the rubbing they would receive on an assembly line, against each other and against the conveyor belt.

**TABLE I**

| SAMPLE | % WAX by Wt. | WAX MW | WAX MP°C | % Rubber by Wt. | IZOD | DART | MFI | GLOSS | COF | Abrasion/Dust |
|---|---|---|---|---|---|---|---|---|---|---|
| A | 1.5 | 850 | 103 | 5.5 | 1.5 | 78 | 5.1 | 58 | 0.32 | moderate |
| B | 1.5 | 850 | 103 | 5.7 | 1.6 | 88 | 5.4 | 80 | 0.29 | heavy |
| C | 1.5 | 850 | 103 | 2.5 | - | - | 5.7 | - | 0.25 | moderate |
| D | 1.0 | 2000 | 126 | 4.0 | 1.3 | 72 | 4.3 | 78 | 0.17 | slight |
| E | 1.5 | 2000 | 126 | 4.0 | 1.3 | 68 | 4.5 | 79 | 0.19 | very slight |
| F | 1.0 | 3000 | 133 | 4.0 | 1.3 | 69 | 4.4 | 81 | 0.19 | very slight |
| G | 1.5 | 3000 | 133 | 4.0 | 1.0 | 66 | 5.0 | 82 | 0.16 | none |
| H | 1.0 | HDPE | 134 | 4.0 | 1.0 | 71 | 4.5 | 81 | 0.24 | none |
| Properties were determined according to the following procedures: | | | | | | | | | | |
| Molecular wt (Mₙ): Vapor Pressure Osmometry | | | | | | | | | | |
| Melting Pt. (MP): ASTM D-127 | | | | | | | | | | |
| IZOD: ASTM D-256 | | | | | | | | | | |
| Dart: ASTM D-3029 | | | | | | | | | | |
| Melt Index (HFI): ASTM D-1238 FR-A | | | | | | | | | | |
| Gloss: ASTM D-528 | | | | | | | | | | |
| Coeff. of Friction (COF): ASTM D-1894 | | | | | | | | | | |

From this table can be seen the effect of different waxes on dusting at mold-ejection temperatures and the effect on coefficients of friction, gloss properties, and impact strengths. In Samples A-C, low molecular weight waxes (MW=850) achieved above-average gloss figures and good impact characteristics but were very poor in COF and dusting properties. Transmission Electron Micrographic (TEM) analysis of these samples indicated no discrete particles of wax in the matrix. All of the low MW wax is believed to have diffused into the rubber particles and/or dissolved in the polystyrene matrix.

However, once the wax MW's reached 2000, the COF and dusting properties improved drastically. TEM analysis of Samples D and E indicate that small particles of the PE wax were forming and dispersed throughout the polystyrene matrix. Samples F and G indicate that the preferable molecular weight for the PE was in the range of about 3000, with an MP of 133°C. Sample G appeared to offer the best results with a COF at a very low 0.16 and no dusting reported. Sample G utilized a PE wax with a MW of 3000 in the amount of 1.5% by weight. It obtained acceptable impact and MFI properties with exceptional gloss, COF, and no abrasion dust. As a control, a high density polyethylene (HDPE) was added to the same IPS used in Sample G to get Sample H, and its properties were measured. The resulting COF was too high to be acceptable, although dusting was non-evident.

It is believed from the results of the physical parameters and TEM analyses, that at least two factors contribute to desirably low COF's and optimal abrasion resistance in IPS materials. These factors are: insolubility of the lubricant additive in polystyrene and rubber (which appears to be molecular-weight-dependent), and the level of the melting point (MP) of the lubricant additive. By selecting a lubricant material such as PE wax with MW >1000, and preferably MW>2000, discrete particles of the lubricant appear in the matrix of the finished IPS article. These discrete particles contribute to the low COF of the article.

Also, by selecting a lubricant additive with a melting point greater than the mold ejection temperatures encountered, i.e., greater than about 105°C, an IPS material is obtained that is abrasion-resistant and low-friction from the time it leaves the mold. Since the critical period for molded IPS articles with respect to dusting and abrasion is the period immediately after they leave the mold, the present invention provides a process for both optimizing "slipperiness" and minimizing dusting and fines by utilizing waxes that crystallize above the mold-release temperature.

While the preferred range of molecular weights for the polyethylene wax additives is about 1000 to 3000, the most preferred embodiment is an IPS material having about 1.5% by weight of a polyethylene wax with a molecular weight of about 3000. As shown in Table I, this material (Sample G) also exhibited superior gloss properties and acceptable impact and melt flow properties, all of which are desirable in making articles such as cassette housings and floppy discs.

It should be noted that in the examples given in Table I, abrasion tests were conducted by rubbing textured surfaces of the materials together at constant speed and downward force and then visually inspecting the sample and textured surface for fines.

Table II below indicates another aspect of the present invention, relating to a different parameter that we believe signifies improved abrasion resistance and lowered dusting characteristics. In Table II we have investigated the effect that the penetration value of a particular polyethylene wax has in improving the desirable properties of IPS materials. The investigation was performed by selecting a series of PE waxes that all fit the desirable criteria set forth in Table I, i.e., Mₙ molecular weights of 1000 and higher, and melting points of 105°C and higher. PE waxes in these categories were selected which exhibited penetration values of less than 0.1 up to about 3 as determined by ASTM D-1321. The results are evident in Table II:

**TABLE II**

| PROPERTIES OF POLYETHYLENE WAXES AND IPS CONTAINING SAME | | | | | | |
|---|---|---|---|---|---|---|
| PE Wax | Mol. Wt. | | M.P., °C | Penetration @ 25°C [Units - 0.1 mm] ASTM D-1321 | COF | Abrasion/Dusting |
| | Mₙ | M_{w} | | | | |
| A | 850 | - | 107 (103) | 2.0 | 0.25- | Hoderate/ |
| | | | | | 0.35 | Heavy |
| | | | | | | |
| B | 2000 | - | 126 (126) | 0.5 | 0.17- | VSltight/ |
| | (2070) | (2420) | | | 0.19 | Slight |
| | | | | | | |
| C | 3000 | - | 129 (133) | 0.5 | 0.16- | None/ |
| | (3390) | (12950) | | | 0.19 | VSlight |
| | | | | | | |
| D | 1700 | 4000 | 106 (105) | 3 | -- | Slight |
| | (2500) | (4100) | | | | |
| | | | | | | |
| E | 2800 | 6500 | 120 (123) | <0.1 | -- | None/ |
| | (3300) | (6000) | | | | VSlight |
| | | | | | | |
| F | 7700 | 35,000 | 104 (100) | 3 | -- | Moderate |
| | (7800) | (30,900) | | | | |
| Data in () determined by GPC (Get Permeation Chromatography) or DSC (Differential Scanning Calorimetry). | | | | | | |
| Penetration: ASTM D-1321-76 (77°F) | | | | | | |

In this table it can be seen that the wax molecular weight (Mₙ) and melting point, while necessary to determine successful IPS materials, may not be sufficient to completely define them. For example, PE waxes A, D, and F all had measured penetration values of 2-3. These PE waxes produced IPS samples which exhibited significant and unacceptable abrasion/dusting effects, even though they fit the other two criteria, i.e., molecular weight and melting point. On the other hand, the IPS samples made from PE waxes having penetration values below about 1 (i.e., waxes B, C, and E) were significantly free of abrasion/dusting effects. Therefore, it can be seen that in addition to molecular weight and melting point, penetration values of the PE waxes have significant bearing on the abrasion/dusting resistance of the final IPS products. The IPS materials disclosed herein were made by "dry-blending" or compounding the dry elements in a twin-screw extruder (5cm, 50:1 L/D). An existing IPS material in pellet or granular form was blended with polyethylene wax pellets and then melt-blended by running the dry blend through the twin-screw extruder.

Other methods of making the IPS/PE wax product include adding the PE wax to the feed stream in the IPS polymerization process; and, injecting PE wax directly into the IPS reactor down-stream of the phase-inversion point.

## Claims

1. An impact resistant polystyrene compound comprising a blend of:
a) from 95 to 99 % by weight of an impact resistant polystyrene polymer having discrete particles of rubber in a polystyrene matrix; and
b) from 1 to 5 % by weight of a high molecular weight polyethylene wax having a number average molecular weight ranging from 1000 to 7000 and a melting point greater than 100° C, and having a penetration value at 25° C as measured by ASTM D-1321 of less than 1.

2. The compound of claim 1, wherein the high molecular weight polyethylene wax has a number average molecular weight greater than 2000, a melting point greater than 105° C, and a penetration value less than 1.

3. The compound of claim 2 wherein said polyethylene wax has a melting point higher than 105° C, a number average molecular weight greater than 2000, and a penetration value of from less than 0.1 to 0.5.

4. The compound of claim 3, wherein said polyethylene wax has a melting point of 120° C, a number average molecular weight of 2800, and a penetration value of less than 0.5.

5. The impact polystyrene compound of any one of the preceding claims, wherein said polyethylene wax is added to said polystyrene compound by melt-blending in a screw extruder.

6. The impact polystyrene compound of any one of the preceding claims, wherein said polyethylene wax is added to said polystyrene compound by addition to the feed stream of styrene going into an impact resistant polystyrene containing reactor.

7. A method of manufacturing an impact resistant polystyrene compound exhibiting improved coefficient of friction and anti-dusting properties, said method comprising melt-blending with an impact polystyrene compound up to 5 % by weight of a high molecular weight polyethylene wax having a number average molecular weight of from 1000 to 7000, a melting point exceeding 100° C, and a penetration value of less than 1.

8. The method of manufacturing of claim 7 wherein said polystyrene compound is polystyrene having discrete rubber particles in a polystyrene matrix, said wax is a polyethylene material having a number average molecular weight exceeding 2000, a melting point exceeding 105° C, and a penetration value of less than 0.5.

## Patentansprüche

1. Schlagfeste beständige Polystyrolverbindung, umfassend eine Mischung von:
a) 95 bis 99 Gew.% eines schlagfesten beständigen Polystyrolpolymeren mit diskreten Teilchen von Kautschuk in einer Polystyrolmatrix und
b) 1 bis 5 Gew.% eines hochmolekulargewichtigen Polyethylenwachses mit einem Molekulargewicht-Zahlenmittel, das im Bereich von 1000 bis 7000 liegt, und einem Schmelzpunkt größer als 100°C und mit einem Penetrationsindex bei 25°C, wie mittels ASTM D-1321 gemessen, von weniger als 1.

2. Verbindung nach Anspruch 1, wobei das hochmolekulargewichtige Polyethylenwachs ein Molekulargewicht-Zahlenmittel größer als 2000, einen Schmelzpunkt größer als 105°C und einen Penetrationsindex kleiner als 1 hat.

3. Verbindung nach Anspruch 2, wobei das Polyethylenwachs einen Schmelzpunkt höher als 105°C, ein Molekulargewicht-Zahlenmittel größer als 2000 und einen Penetrationsindex von weniger als 0,1 bis 0,5 hat.

4. Verbindung nach Anspruch 3, wobei das Polyethylenwachs einen Schmelzpunkt von 120°C, ein Molekulargewicht-Zahlenmittel von 2800 und einen Penetrationsindex weniger als 0,5 hat.

5. Schlagfeste Polystyrolverbindung nach einem der vorhergehenden Ansprüche, wobei das Polyethylenwachs zu der Polystyrolverbindung durch Schmelzmischen in einem Schraubenextruder hinzugefügt ist.

6. Schlagfeste Polystyrolverbindung nach einem der vorhergehenden Ansprüche, wobei das Polyethylenwachs zu der Polystyrolverbindung durch Zugabe zu dem Beschickungsstrom von Styrol, das in einen schlagfestes beständiges Polystyrol enthaltenden Reaktor geht, hinzugegeben ist.

7. Verfahren zum Herstellen einer schlagfesten beständigen Polystyrolverbindung, die verbesserten Reibungskoeffizienten und Anti-Stäubungseigenschaften zeigt, wobei das Verfahren umfaßt Schmelzmischen mit einer schlagfesten Polystyrolverbindung bis zu 5 Gew.% eines hochmolekulargewichtigen Polyethylenwachses mit einem Molekulargewicht-Zahlenmittel von 1000 bis 7000, einem 100°C übersteigendem Schmelzpunkt und einem Penetrationsindex von weniger als 1.

8. Verfahren zum Herstellen nach Anspruch 7, wobei die Polystyrolverbindung Polystyrol mit diskreten Kautschukteilchen in einer Polystyrolmatrix ist, wobei das Wachs ein Polyethylenmaterial mit einem 2000 übersteigenden Molekulargewicht-Zahlenmittel, einem 105°C übersteigenden Schmelzpunkt und einem Penetrationsindex von weniger als 0,5 ist.

## Revendications

1. Un composé de polystyrène résistant aux chocs comprenant un mélange de:
a) de 95 à 99 % en poids d'un polymère de polystyrène résistant aux chocs comportant des particules grenues de caoutchouc dans une matrice de polystyrène; et
b) de 1 à 5 % en poids d'une cire de polyéthylène à poids moléculaire élevé ayant un nombre de poids moléculaire moyen se situant entre 1000 à 7000 et ayant un point de fusion supérieur à 100°C, et ayant un indice de pénétration à 25°C, mesuré selon les standards ASTM D-1321 inférieur à 1.

2. Le composé de la revendication 1 dans lequel la cire de polyéthylène à poids moléculaire élevé a un nombre de poids moléculaire moyen supérieur à 2000, un point de fusion supérieur à 105°C et un indice de pénétration inférieur à 1.

3. Le composé de la revendication 1 dans lequel cette cire de polyéthylène a un point de fusion supérieur à 105°C, un nombre de poids moléculaire moyen supérieur à 2000 et un indice de pénétration de moins de 0,1 à 0,5.

4. Le composé de la revendication 3 dans lequel cette cire de polyéthylène a un point de fusion de 120°C, un nombre de poids moléculaire moyen 2800 et un indice de pénétration inférieur à 0,5.

5. Le composé de polystyrène résistant aux chocs selon l'une quelconque des revendications précédentes dans lequel cette cire de polyéthylène est ajoutée à ce composé de polystyrène en mélange à l'état en fusion dans une extrudeuse à vis.

6. Le composé de polystyrène résistant aux chocs selon l'une quelconque des revendications précédentes dans lequel cette cire de polyéthylène est ajoutée à ce composé de polystyrène par addition à un courant d'alimentation de styrène pénétrant dans un réacteur contenant un polystyrène résistant aux chocs.

7. Un procédé de fabrication d'un composé de polystyrène résistant aux chocs présentant un coefficient de friction et des propriétés anti-poussières améliorés, ce procédé comprenant le mélange à l'état en fusion avec un composé de polystyrène résistant aux chocs de jusqu'à 5% en poids d'une cire de polyéthylène à poids moléculaire élevé ayant un nombre de poids moléculaire moyen de 1000 à 7000, un point de fusion dépassant 100°C, et une indice de pénétration inférieur à 1.

8. La méthode de fabrication selon la revendication 7, selon laquelle ce composé de polystyrène est un polystyrène comprenant des particules grenues de caoutchouc dans une matrice de polystyrène, cette cire est une matière de polyéthylène ayant un indice de poids moléculaire moyen dépassant 2000, un poids de fusion dépassant 105°C et un indice de pénétration inférieur à 0,5.
